# EUROPEAN PATENT APPLICATION

(11) **EP 0 801 351 A2**
(43) Date of publication of application: **15.10.1997**
(21) Application number: 97301448.3
(22) Date of filing: 04.03.1997
(51) Int. Cl.: G06F 13/12, G06F 13/38

(54) **Integrated circuit processor**

(30) Priority: 11.04.1996 GB 9607528
(71) Applicant: INTERNATIONAL COMPUTERS LIMITED, Putney, London, SW15 1SW (GB)
(72) Inventor: Vernon, John Albert, Stockport, Cheshire SK 12 3BU (GB)
(74) Representative: Guyatt, Derek Charles

(57) **Abstract**

An integrated circuit chip includes a processor and a number of interface logic circuits connected to the processor. The interface logic circuits are implemented by means of field-programmable logic within the chip, so that the chip can readily be reconfigured e.g. to implement a number of different designs of peripheral controller. The processor may be implemented in custom logic, or alternatively may also be implemented by means of the field-programmable logic within the chip. The chip may also include RAM and ROM for use by the processor.

## Description

### Background to the Invention

This invention relates to integrated circuit processors. The invention is particularly, although not exclusively, concerned with processors for performing dedicated peripheral control functions within a computer system.

Mainframe computers generally incorporate a large number of peripheral controllers, each of which comprises a high-performance processor, along with interface logic for interfacing with one or more input/output (I/O) channels. Conventionally, each of these controllers is implemented using a number of chips, including a processor chip and a number of further chips, which may be field-programmable gate array (FPGA) chips, for implementing the interface logic.

It is desirable to reduce the number of chips required to implement such a peripheral controller. Conventionally, this would involve designing a special-purpose custom chip unique to each controller, leading to a large number of separate chip designs.

One object of the present invention is to reduce the number of chips required to implement such a peripheral controller, without the need for custom chip design unique to the controller.

### Summary of the Invention

According to the invention there is provided an integrated circuit chip including:
a) a processor; and
b) at least one interface logic circuit connected to the processor;
characterised in that said interface logic circuit is implemented by means of field-programmable logic within said integrated circuit chip.

It can be seen that, by incorporating the processor and the Interface logic circuit in the same chip, the number of chips is reduced. However, because the interface is implemented in field-programmable logic, the chip can be used for a number of different applications e.g. to implement an number of different designs of peripheral controller.

### Brief Description of the Drawings

Figure 1 is a block diagram of a peripheral controller.
Figure 2 is block diagram of an integrated circuit chip which may be used for implementing the peripheral controller.
Figure 3 is block diagram of an alternative integrated circuit chip which may be used for implementing the peripheral controller.
Figure 4 is block diagram illustrating a modification of the integrated circuit chip of Figure 2.

### Description of Embodiments of the Invention

Various embodiments of the invention will now be described by way of example with reference to the accompanying drawings.

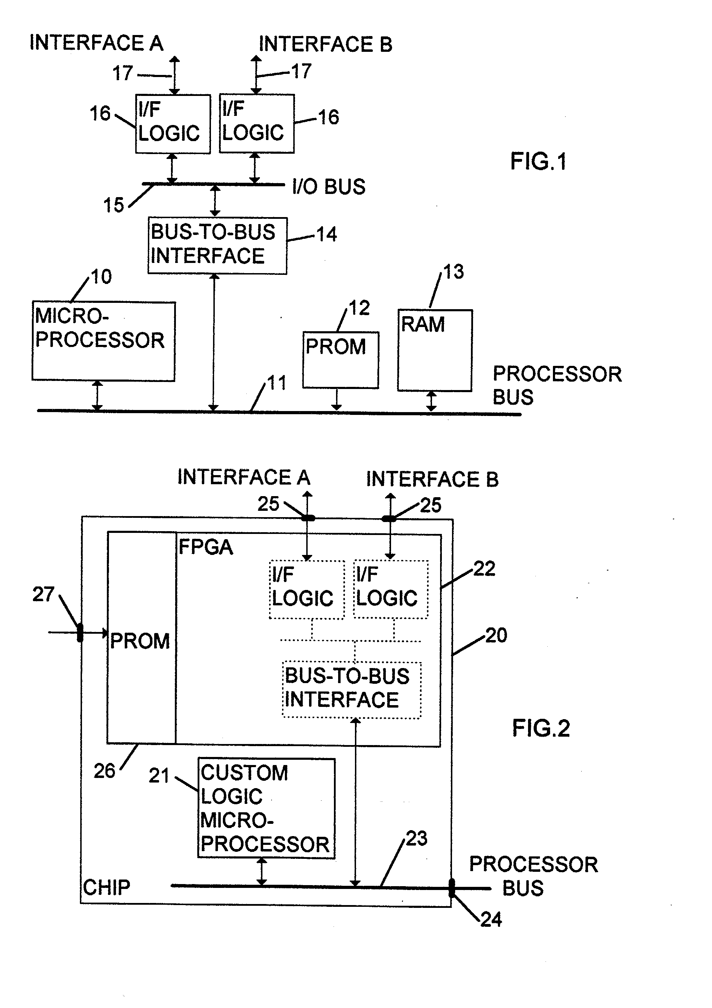

Referring to Figure 1, this shows a peripheral controller comprising a reduced instruction set (RISC) microprocessor 10 connected by way of a processor bus 11 to a programmable read-only memory (PROM) 12 and a random access memory (RAM) 13. The PROM holds programs for the microprocessor 10, while the RAM provides working storage. The processor bus 11 is also connected, by way of bus-to-bus interface logic 14, to an I/O bus 15. The I/O bus is connected to a number of interface logic circuits 16, which are in turn connected to respective interfaces (interface A, interface B) 17. For example, one of the interfaces 17 may be connected to a high-speed serial token-passing network, and the other to a SCSI bus.

Conventionally, the interface logic circuits 16 would be implemented using a number of separate chips. For example, a interface logic circuit might comprise a serializer/deserializer (SERDES) chip, a media access control (MAC) chip, and an I/O bus interface chip.

Referring to Figure 2, this shows a first integrated circuit chip in accordance with the invention. The chip 20 includes a microprocessor 21, implemented by means of custom logic, and a field-programmable gate array (FPGA) 22. The processor has a bus 23 connected to external pins 24 on the chip, and also connected internally to the FPGA. The FPGA is also connected to external pins 25. The chip also includes a PROM 26 which can be programmed by way of external pins 27.

The contents of the PROM 26 control the configuration of the FPGA. Thus, the FPGA can be configured to provide a variety of different logic functions, by writing suitable control data into the PROM. In this particular example, the FPGA 22 is configured, by suitable programming of the PROM, to provide the functions of bus-to-bus interface logic, an I/O bus, and a plurality of interface logic circuits, as indicated schematically by the dotted lines in Figure 2.

The chip 20 thus provides the complete functionality of the peripheral controller circuit shown in Figure 1, excluding the PROM 12 and RAM 13. In use, the PROM 12 and RAM 13 are connected to the external pins 24, while the interfaces (interface A, interface B) are connected to the external pins 25.

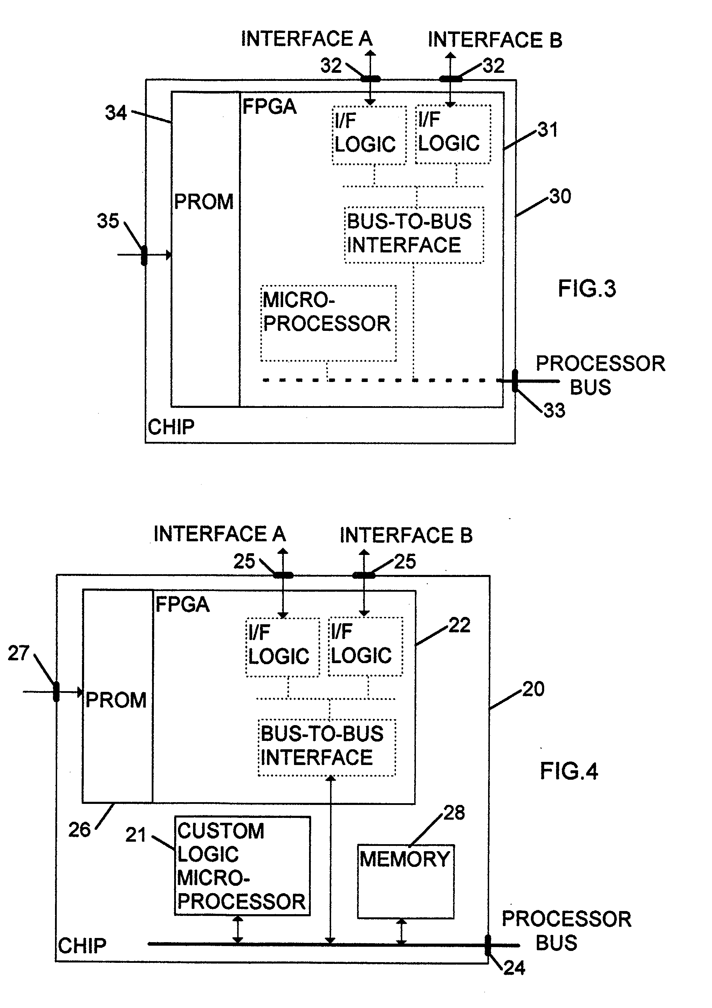

Referring to Figure 3, this shows another form of integrated circuit chip in accordance with the invention. The chip 30 includes a field-programmable gate array (FPGA) 31, connected to external pins 32, 33 on the chip. The chip also includes a PROM 34 which can be programmed by way of external pins 35, and which controls the configuration of the FPGA.

In this particular example, the FPGA 31 is configured, by suitably programming the PROM 34, to provide the functions of a microprocessor, bus-to-bus interface logic, an I/O bus, and a plurality of interface logic circuits, as indicated schematically by the dotted lines in Figure 3.

The chip 30 thus provides the complete functionality of the peripheral controller circuit shown in Figure 1, excluding the PROM 12 and RAM 13. In use, the PROM 12 and RAM 13 are connected to the external pins 33, while the interfaces (interface A, interface B) are connected to the external pins 32.

It can be seen that, because the bus-to-bus interface logic and the interface logic circuits are implemented in field-programmable logic in Figures 2 and 3, they can be readily reconfigured, to tailor the controller to different applications. The chip shown in Figure 3 additionally allows the processor itself to be reconfigured.

Figure 4 shows a possible modification of the chip shown in Figure 2, in which the chip further includes memory 28 (comprising both RAM and PROM) integrated into the chip, and connected to the processor bus. The memory 28 replaces the separate PROM and RAM chips 12, 13 of Figure 1, thus reducing the chip count still further. It will be appreciated that a similar modification may be made to the chip shown in Figure 3: that is, a memory connected to the processor bus may also be integrated into the chip 30

It will be appreciated that many other modifications may be made to the system described above without departing from the scope of the present invention.

## Claims

1. An integrated circuit chip (20;30) including:
a) a processor; and
b) at least one interface logic circuit connected to the processor;
characterised in that said interface logic circuit is implemented by means of field-programmable logic (22,26;31,34) within said integrated circuit chip.

2. An integrated circuit chip according to Claim 1 wherein said field-programmable logic comprises a field-programmable gate array (22;31) and a programmable read-only memory (26;34) for controlling the configuration of said field-programmable gate array.

3. An integrated circuit chip according to Claim 1 or 2 wherein said processor is implemented in custom logic (21) within said integrated circuit chip.

4. An integrated circuit chip according to Claim 1 or 2 wherein said processor is implemented by means of said field-programmable logic (31,34) within said integrated circuit chip.

5. An integrated circuit chip according to any one of Claims 1 to 4 wherein said integrated circuit chip (20) further includes at least one memory (28).

6. An integrated circuit chip (20;30) including:
a) a processor having a processor bus (23);
b) an I/O bus;
c) a bus-to-bus interface interconnecting said processor bus to said I/O bus; and
d) a plurality of interface logic circuits connected to said I/O bus;
characterised in that said bus-to-bus interface and said plurality of interface logic circuits are all implemented by means of field-programmable logic (22,26;31,34) within said integrated circuit chip.

7. An integrated circuit chip according to Claim 6 wherein said field-programmable logic comprises a field-programmable gate array (22;31) and a programmable read-only memory (26;34) for controlling the configuration of said field-programmable gate array.

8. An integrated circuit chip according to Claim 6 or 7 wherein said processor is implemented in custom logic (21) within said integrated circuit chip.

9. An integrated circuit chip according to Claim 6 or 7 wherein said processor is implemented by means of said field-programmable logic (31,34) within said integrated circuit chip.

10. An integrated circuit chip according to any one of Claims 6 to 9 wherein said integrated circuit chip further includes at least one memory (28) connected to said processor bus (23).
